# EUROPÄISCHE PATENTSCHRIFT

(11) **EP 0 562 176 B1**
(45) Veröffentlichungstag und Bekanntmachung des Hinweises auf die Patenterteilung: **05.03.1997**
(21) Anmeldenummer: 92121124.9
(22) Anmeldetag: 11.12.1992
(51) Int. Cl.: A01B 15/14, A01B 3/46

(54) **Aufsattel- oder Anhänge-Pflug**
Semimounted or drawn plough
Charrue semiportée ou tractée

(30) Priorität: 27.03.1992 DE 9204130 U
(43) Veröffentlichungstag der Anmeldung: 29.09.1993
(73) Patentinhaber: Rabewerk GmbH + Co., 49152 Bad Essen (DE)
(72) Erfinder: Albers, Heinrich, Dipl.-Ing., W-4515 Bad Essen (DE)
(74) Vertreter: Missling, Arne, Dipl.-Ing.

(56) Entgegenhaltungen:
- DE-A- 2 639 608
- DE-U- 9 114 507
- FR-A- 2 325 309
- FR-A- 2 401 597
- FR-A- 2 664 124
- GB-A- 2 119 614

## Beschreibung

Die Erfindung betrifft einen vielscharigen Aufsattel- oder Anhänge-Pflug mit einem geteilten Pflugrahmen und mindestens einem Stützrad im Bereich der Rahmenteilung, wobei beide Pflugrahmenteile über ein Zwischenstück gelenkig miteinander verbunden sind.

Bei derartigen langbauenden vielscharigen Pflügen ist es erforderlich, eine Abstützung des Pflugrahmens im Bereich dessen hinterer Hälfte vorzunehmen, wobei die Abstützung über einen Karren oder über ein von einem Stabilisator gehaltenen Rad erfolgen kann. Aus der DE-A-26 39 608 ist ein entsprechender Aufsattel-Drehpflug bekannt, wobei hier im Bereich des Karrens eine Verlängerung des Pflugkörperabstandes vorgenommen worden ist, damit die Räder des Karrens oder des Stützrades aus dem Bereich der Pflugkörper gelangen. Bei derartigen Pflügen ist die Schnittbreite sämtlicher Pflugkörper konstruktiv vorgegeben, wobei eine Änderung nicht möglich ist. Es ist jedoch bereits ein Pflug bekannt, bei dem das Zwischenstück zwischen dem vorderen und hinteren Pflugrahmenteil gelenkig an diesen beiden Teilen angeordnet ist, wobei die relative Lage dieses Zwischenstückes zum vorderen und hinteren Pflugkörperteil dadurch aufrechterhalten wird, daß hier eine Parallel-Lenkeranordnung vorgesehen ist. Bei diesem bekannten Pflug ist es möglich, die Schnittbreite sämtlicher Pflugkörper zu ändern, jedoch setzt dies voraus, daß jeder einzelne Pflugkörper verstellt wird. Gleichzeitig muß eine mühsame Verschwenkung der schweren Pflugrahmenteile relativ zum Zwischenstück erfolgen, wobei hier wiederum diese Verschwenkungen in Abhängigkeit der Schnittbreite der Pflugkörper vorgenommen werden muß. Wollte man also sämtliche Pflugkörper bei einem Pflug nach der DE-A-26 39 608 verstellen, so müßten einmal sämtliche 8 Pflugkörper individuell verstellt werden und darüberhinaus auch noch das Zwischenstück gelenkig zwischen dem vorderen und hinteren Pflugrahmenteil angeordnet und verstellt werden, eine Arbeit, die sehr zeitaufwendig ist, so daß diese Möglichkeit der Verstellung der Pflugkörper nur theoretisch gegeben ist. In der Praxis werden die Pflugkörper einmal eingestellt und dann die Schnittbreite beibehalten.

Aus der FR-A-2 325 309 ist ein Pflug bekannt, dessen Rahmen zweigeteilt ist, wobei der hintere Rahmenteil über eine Achse an dem vorderen Rahmenteil angeschlossen ist, so daß der hintere Rahmenteil relativ zum vorderen Rahmenteil höhenbeweglich ausgebildet ist. Im Bereich der Rahmenteilung ist ein Stützrad angeordnet.

Der Erfindung liegt die Aufgabe zugrunde, einen Pflug der eingangs genannten Art so auszubilden, daß eine Verstellung der Schnittbreite aller Pflugkörper in gleichem Maße kontinuierlich ohne großen Aufwand möglich ist. Eine weitere Aufgabe der Erfindung besteht darin, bei einer Verstellung der Arbeitsbreite sämtlicher Pflugkörper auch die Arbeitsbreite des ersten Pflugkörpers entsprechend anzupassen.

Diese Aufgabe wird mit den Merkmalen des Anspruches 1 gelöst.

Bei einem erfindungsgemäßen Pflug sind somit die Pflugkörper über Konsolen schwenkbar am Pflugrahmen angeordnet, wobei die gleichsinnige Verschwenkung der Pflugkörper am vorderen Rahmenteil wie auch am hinteren Rahmenteil über eine eine Parallelführung bewirkende Stange sichergestellt ist. Diese die Parallelführung des vorderen Pflugrahmenteiles und des hinteren Pflugrahmenteiles bewirkenden Stangen sind über angepaßte Lenker mit dem Zwischenstück verbunden, wobei diese Lenker beim Verschwenken sämtlicher Pflugkörper das Zwischenstück um einen Winkel verschwenken, der der Länge des Zwischenstückes angepaßt ist. Des weiteren wird z. B. über einen dem Zwischenstück parallelgeschaltenen Lenker, der mit dem Zwischenstück ein Parallelogramm bildet, sichergestellt, daß bei einer bevorzugten Ausführungsform und angemessener Länge des Zwischenstückes bei einer Verschwenkung sämtlicher Pflugkörper die Verbindungslinie der Anlenkpunkte des Zwischenstückes an dem vorderen und hinteren Pflugrahmenteil mindestens annähernd den gleichen Winkel zu den Anlagen der Pflugkörper sowohl des vorderen wie auch des hinteren Pflugrahmenteiles beibehält. Hierdurch wird gleichzeitig sichergestellt, daß die beiden Pflugrahmenteile ihre relative Lage zueinander beibehalten. Mit nur einem einzigen Spannschloß oder einem Schwenkzylinder ist es somit möglich, die Schnittbreite aller Pflugkörper gleichsinnig und gleichmäßig zu verstellen.

Gemäß einem weiteren Vorschlag der Erfindung ist das Zwischenstück über eine Stange mit dem Pflugvordergestell oder einem Lenker verbunden, der am Pflugrahmen angelenkt ist und über ein Spannschloß mit dem Pflugvordergestell verbunden ist. Durch diesen Lenker werden zum einen Zugkräfte übertragen und zum anderen wird infolge der Verstellung der Arbeitsbreite sämtlicher Pflugkörper eine zusätzliche Verschiebung des ersten Pflugkörpers zum Pflugvordergestell bzw. zum Dreipunktturm erhalten und zwar derart, daß die Schnittbreitenänderung des ersten Pflugkörpers gleich der der übrigen Pflugkörper ist. Auf eine derartige Korrektur könnte nur dann verzichtet werden, wenn der Abstand des ersten Pflugkörpers zum Schwenkpunkt des Pflugrahmens gleich dem Abstand der übrigen Pflugkörper untereinander ist. Da dies in der Regel nicht der Fall ist und man den Abstand des ersten Pflugkörpers aus Gründen der kürzeren Gesamtbaulänge des Pflugrahmens möglichst gering wählt, ist eine entsprechende Korrektur vorteilhaft, will man nicht die Schnittbreite des ersten Pflugkörpers gesondert verstellen.

Die Beibehaltung des Winkels des Zwischenstückes zu den Anlagen der Pflugkörper und damit der Pflugrahmenteile zueinander kann auch durch ein Lenkersystem erhalten werden, wie dies im Ausführungsbeispiel nach Figur 4 dargestellt ist. Es ist auch denkbar, diese Ausrichtung des Zwischenstückes auf hydraulische Weise durch Parallelschaltung oder Hintereinanderschaltung zweier Hydraulikzylinder zu erreichen, die eine entsprechende Verschwenkung des vorderen und hinteren Pflugteiles relativ zum Zwischenstück gewährleisten, wie dies in den Ausführungsbeispielen nach den Figuren 5 und 6 der Fall ist.

Zur Erzeugung eines gewissen Anlagedruckes kann es vorteilhaft sein, die Radachse etwas zur Arbeitsrichtung zu verschwenken. Hierzu dient ein auf dem Zwischenstück angelenkter Hebel, dessen Lage zum Zwischenstück über ein Spannschloß einstellbar ist und der das Gelenk trägt, an dem sich der Pflug auf dem Stützrad oder einem Karren abstützt.

Weiterhin ist es vorteilhaft, wenn der Abstand des vorderen Gelenkes zum Schwenklager des in Arbeitsrichtung vorne liegenden Pflugkörpers möglichst klein ist, da dann der seitliche Versatz des Stützrades oder Karrens bei einer Schnittbreitenverstellung minimal ist.

Mehrere Ausführungsbeispiele werden im folgenden anhand der Zeichnung näher beschrieben. In dieser zeigen:

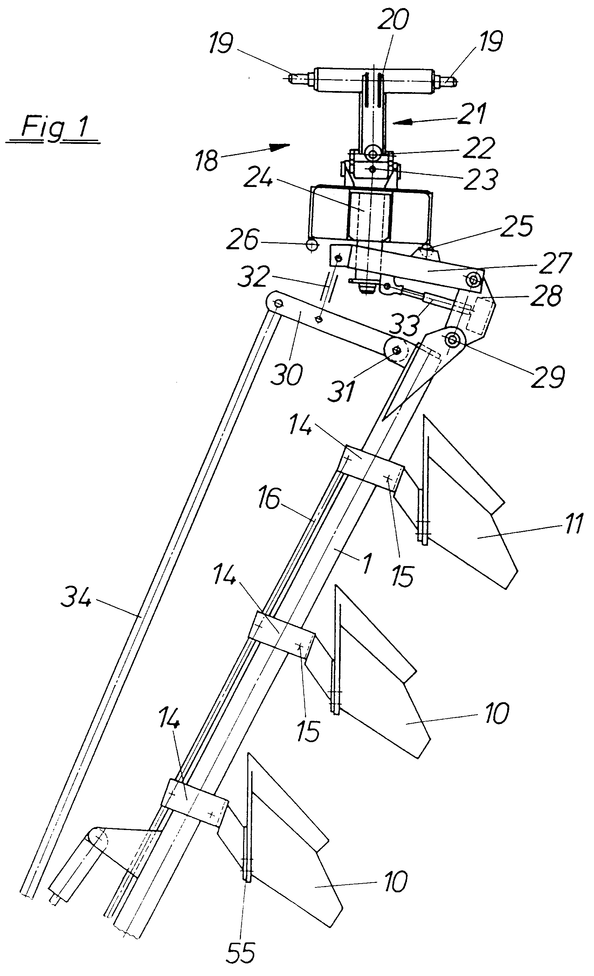

- Figur 1: eine Draufsicht auf das vordere Ende eines erfindungsgemäß ausgebildeten Pfluges,

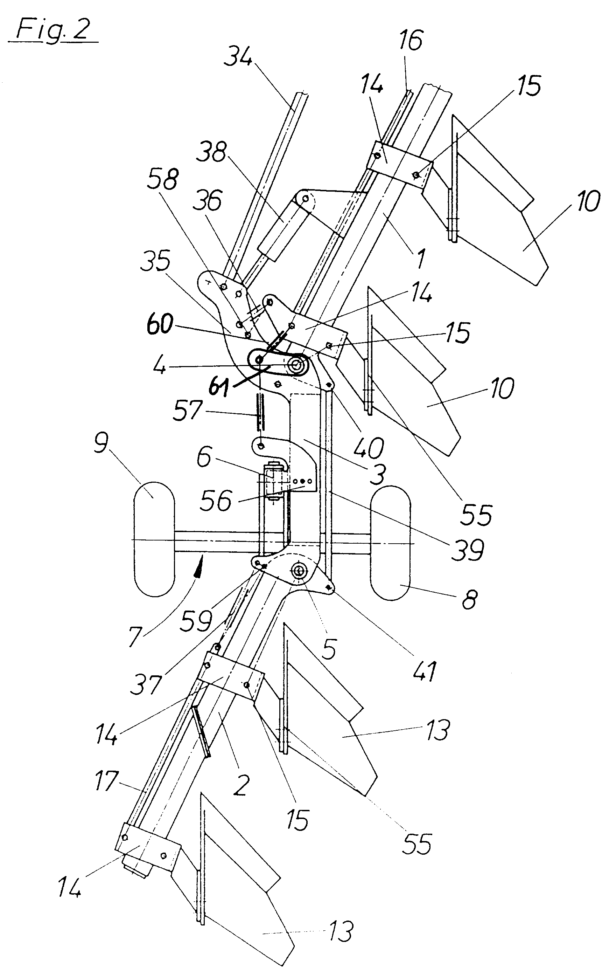

- Figur 2: eine Draufsicht auf das Mittelstück des erfindungsgemäßen Pfluges nach Figur 1,

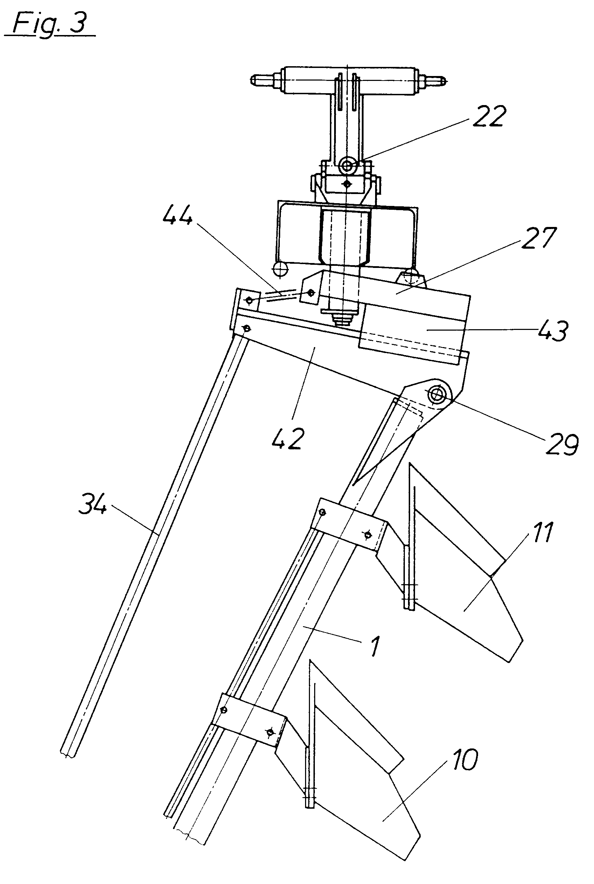

- Figur 3: eine alternative Ausbildung des vorderen Endes eines erfindungsgemäß ausgebildeten Pfluges,

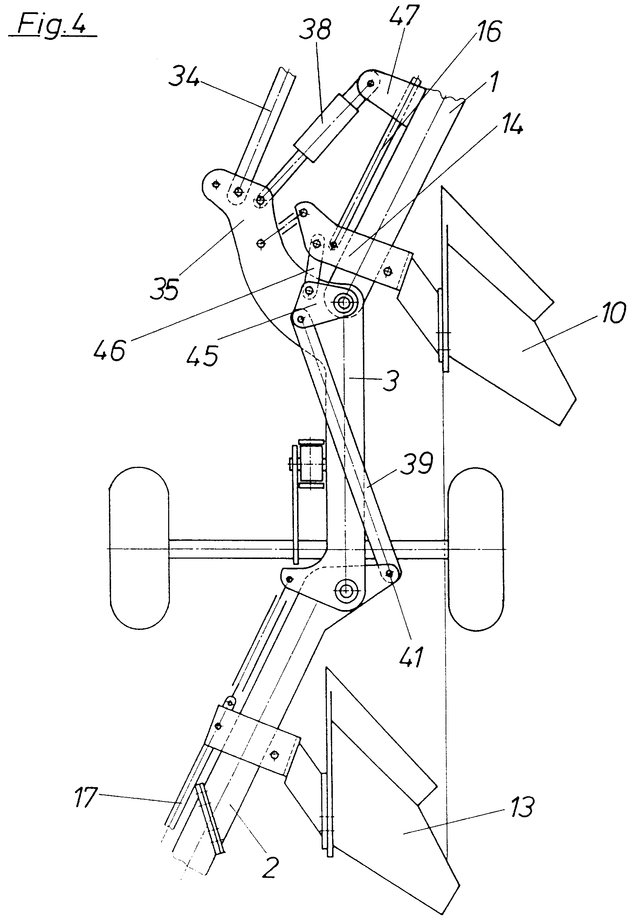

- Figur 4: eine alternative Ausführungsform einer Lenkeranordnung für die relative Ausrichtung des Zwischenstückes relativ zu den vorderen und hinteren Pflugrahmenteilen und

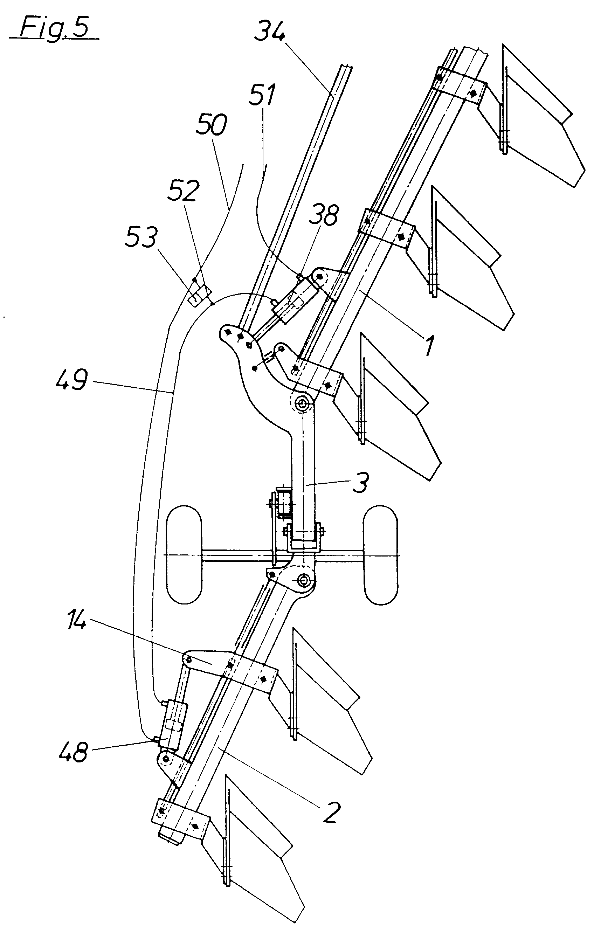

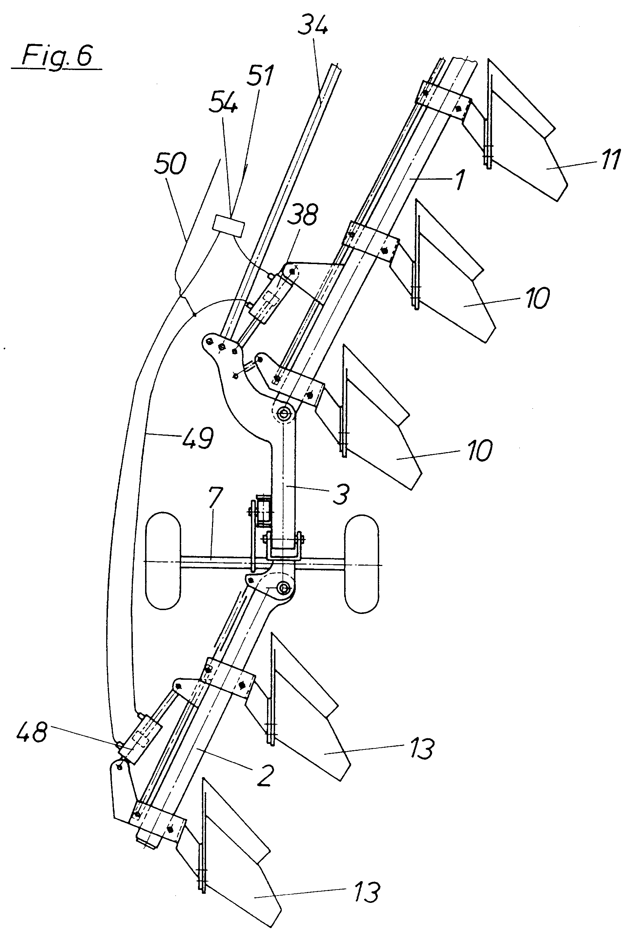

- Figur 5 und 6: zwei Ausführungsbeispiele, bei denen die Verschiebung des vorderen und hinteren Pflugrahmenteiles über miteinander gekuppelte Hydraulikzylinder erfolgt.

Der in den Figuren 1 und 2 dargestellte Aufsattel-Pflug besteht aus zwei Pflugrahmenteilen 1, 2, die über ein Zwischenstück 3 miteinander gelenkig verbunden sind. Das Zwischenstück 3 ist über Gelenke 4, 5 mit den beiden Pflugrahmenteilen 1, 2 verbunden. An dem Zwischenstück 3 ist über ein im wesentlichen horizontal liegendes Gelenk 6 ein Karren 7 angeschlossen, dessen eines Rad 8 in der vom Pflugkörper 10 gezogenen Furche läuft, während das andere Rad 9 auf dem ungepflügten Land läuft. Anstelle des Karrens 7 könnte auch ein stabilisatorgestütztes Rad mit dem Zwischenstück 3 verbunden sein.

Die Pflugkörper 10, 11 am vorderen Pflugrahmenteil 1 wie auch die Pflugkörper 13 am hinteren Pflugrahmenteil 2 sind über Konsolen 14 schwenkbar mit dem Pflugrahmenteil 1 bzw. 2 verbunden. Das Schwenklager der Konsolen 14 ist mit 15 bezeichnet. Am freien Ende der Konsolen ist am vorderen wie auch am hinteren Pflugrahmenteil 1, 2 je eine Stange 16, 17 angeordnet, die eine Parallelführung sämtlicher Pflugkörper 10, 11 bzw. 13 bewirkt. Mit Hilfe dieser die Parallelführung der Pflugkörper bewirkenden Stange kann der Winkel der Pflugkörper relativ zum Pflugrahmen 1 bzw. 2 eingestellt und damit die Schnittbreite sämtlicher Pflugkörper verändert werden.

Das vordere Ende des Pflugrahmens 1, 2 ist über ein Pflugvordergestell 18 mit dem Dreipunktgestänge eines nicht dargestellten Schleppers verbindbar. Die Unterlenker des Schleppers werden an den Zapfen 19 und der Oberlenker an der Anschlußstelle 20 eines Dreipunktturmes 21 angeschlossen. Im Pflugvordergestell 18 ist des weiteren ein lotrecht liegendes Gelenk 22 sowie ein nachgeschaltetes horizontal liegendes Gelenk 23 eingeschaltet.

Das lotrecht liegende Gelenk 22 bildet den Zugpunkt des Pfluges, während das Gelenk 23 die Höhenanpassung des Pfluges gewährleistet. Im Pflugvordergestell ist des weiteren eine Wendeachse 24 vorgesehen sowie zwei Anschläge 25, 26, die einstellbar sind und die jeweiligen Drehendstellungen des Pflugrahmens 1, 2 bestimmen.

Drehfest mit der Wendeachse 24 ist ein Arm 27 befestigt, an dessen einem Ende ein Zwischenlenker 28 angeordnet ist, an dem im Gelenk 29 das vordere Ende des Pflugrahmenteiles 1 angreift. An dem Pflugrahmenteil 1 ist des weiteren ein Lenker 30 im Gelenk 31 angeschlossen, der seinerseits über ein Spannschloß 32 mit dem Arm 27 verbunden ist. An dem Zwischenlenker 28 greift des weiteren ein Spannschloß 33 an, dessen anderes Ende mit dem Arm 27 verbunden ist. Mit Hilfe dieses Spannschlosses 33 kann der gesamte Pflug 1, 2 relativ zum Pflugvordergestell seitlich verschoben werden, so daß hierdurch die Anpassung der Schnittbreite des ersten Pflugkörpers 11 an den Schlepper möglich ist.

An dem Lenker 30 ist des weiteren eine Stange 34 angelenkt, deren hinteres Ende an einem starr mit dem Zwischenstück 3 verbundenen Ansatz 35 angreift. Bei einer Verschwenkung des Zwischenstückes 3 relativ zum Pflugrahmenteil 1, 2 wird auch der Lenker 30 und das Gelenk 31 verschwenkt, wodurch sich eine seitliche Verlagerung des Gelenkes 29 des vorderen Pflugteiles 1 zum lotrechten Gelenk 22 ergibt. Hierdurch wird eine Anpassung der Schnittbreitenänderung auch des ersten Pflugkörpers 11 vorgenommen, so daß sich auch dessen Schnittbreite entsprechend der jeweiligen Schnittbreitenänderung der Pflugkörper 10 und 13 ändert.

Beim Pflugrahmenteil 1 ist die letzte Konsole 14 über einen Lenker 36 und beim hinteren Pflugrahmenteil 2 die Stange 17 über einen Lenker 37 mit dem Zwischenstück 3 verbunden. Es ist jedoch auch denkbar, das hintere Ende der Stange 16 unmittelbar mit dem Zwischenstück 3 zu verbinden. Die Länge und die Anlenkpunkte der Lenker 36, 37 relativ zu den Gelenken 4, 5 des Zwischenstückes 3 sind so gewählt, daß bei einer Verschiebung der vorderen Stange 16 mittels eines Stellzylinders 38 die vorderen und hinteren Pflugkörper 10, 11 und 13 derart verschwenkt werden, daß deren Anlagen immer zueinander parallel bleiben. Hierzu bilden die Anlenkpunkte des Lenkers 36 und die Verbindung der Gelenke 4, 15 ein Parallelogramm. Ein wirkungsmäßig gleiches Parallelogramm bilden der Lenker 37 und die zugehörigen Gelenke 5, 15. Des weiteren wird auch das Zwischenstück 3 derart verschwenkt, daß die Verbindungslinie der Gelenkpunkte 4 und 5 des Zwischenstückes 3 bevorzugt den gleichen Winkel relativ zu den Anlagen der Pflugkörper 10, 11 und 13 beibehalten. Um letzteres zu erreichen, sind gemäß dem Ausführungsbeispiel nach Figur 1 die beiden Pflugrahmenteile 1, 2 über einen dem Zwischenstück 3 parallel laufenden Lenker 39 verbunden, dessen Anlenkpunkte 40, 41 so gewählt sind, daß diese mit den Gelenken 4, 5 des Zwischenstückes 3 ein Parallelogramm bilden.

Es kann anstelle von zwei Parallelogrammen für die Anlenkung der Stangen 16, 17 auch andere Gelenkvierecke eingesetzt werden, die wirkungsmäßig gleich sein müssen, wie dies in Figur 2 durch die alternativen Anschlußpunkte 58, 59 für die Lenker 36, 37 angedeutet ist. Wie es für gewisse Anwendungen vorteilhaft sein kann, wird der Karren 7 und damit auch das Zwischenstück 3 dadurch etwas aus der Fahrtrichtung heraus verschwenkt, z. B. zur Erhöhung des Anlagendruckes bei einer vergrößerten Schnittbreite. Außerdem kann das Gelenk 6 an einem Hebel 56 befestigt werden, der über ein Spannschloß 57 relativ zum Zwischenstück 3 einstellbar ist. Das Spannschloß 57 ist über einen Lenker 60 mit der Konsole 14 verbunden, wobei das Spannschloß 57 und der Lenker 60 an einem Hebel 61 angreift. Hierdurch wird bei einer Schnittbreitenkorrektur automatisch eine Verstellung der Karrenräder 8, 9 erhalten.

Bei dem Ausführungsbeispiel nach Figur 3 ist eine andere Ausbildung des Pflugvordergestelles gewählt worden und zwar ist hier das vordere Ende des Pflugrahmenteiles 1 im Punkt 29 an einem Kulissenstein 42 befestigt, die in einer Kulisse 43 verschiebbar ist. Am Kulissenstein 42 greift die Stange 34 an. Ferner greift daran ein Spannschloß 44 an, dessen anderes Ende mit dem Arm 27 verbunden ist. Bei einer Verschwenkung des Zwischenstückes 3 relativ zum Pflugrahmenteil 1 erfolgt auch gleichzeitig eine Verschwenkung des Rahmens 1 relativ zum Arm 27, so daß auch hierdurch gleichzeitig eine Anpassung der Schnittbreite des ersten Pflugkörpers 11 an die Schnittbreitenänderung der übrigen Pflugkörper erfolgt.

Bei dem Ausführungsbeispiel nach Figur 4 sind gleiche Teile mit gleichen Bezugszeichen versehen. Der Aufbau des vorderen und des hinteren Endes ist entsprechend dem Ausführungsbeispiel nach Figur 1 und 2 bzw. 3 vorgesehen. Geändert ist, gegenüber diesen Ausführungsbeispielen, die Führung des Zwischenstückes 3 relativ zu den Pflugrahmenteilen 1 und 2. Der Lenker 39, der am hinteren Pflugrahmenteil 2 im Gelenkpunkt 41 angreift, ist an einem Zwischenlenker 45 angelenkt, der wiederum über einen weiteren Lenker 46 mit der Konsole 14 des Pflugkörpers 10 des vorderen Pflugrahmenteiles 1 verbunden ist. Der die Verschiebung aller Pflugkörper 10, 11 und 13 bewirkende Stellzylinder 38 ist, gleichfalls wie beim Ausführungsbeispiel nach Figur 2, an einem Arm 47 angelenkt, der starr mit dem Pflugrahmenteil 1 verbunden ist.

Bei dem Ausführungsbeispiel nach Figur 5 sind gleiche Teile mit gleichen Bezugszeichen versehen. Bei diesem Ausführungsbeispiel, das wiederum in seinem grundsätzlichen Aufbau dem Ausführungsbeispiel nach den Figuren 1 und 2 bzw. 3 entspricht, wird die relative Verschwenkung des Zwischenstückes 3 zu den Pflugrahmenteilen 1 und 2 mit Hilfe eines dem Stellzylinder 38 nachgeschalteten Stellzylinders 48 erhalten. Die Wege der beiden Stellzylinder sind so aufeinander abgestimmt, daß die entsprechende Verschwenkung der Pflugkörper relativ zu den Pflugrahmenteilen 1, 2 und die Verschwenkung des Zwischenstückes 3 zu diesen Pflugrahmenteilen erhalten wird. Zu diesem Zweck ist der Stellzylinder 38 über eine Leitung 49 mit dem Stellzylinder 48 verbunden, wobei sowohl der Stellzylinder 38 wie auch der Stellzylinder 48 über zwei Hydraulikleitungen 50, 51 mit dem Steuerventil am Schlepper verbunden sind. Die Leitung 50 ist mit der Leitung 49 über eine Fülleitung 52 verbunden, die im Betrieb durch ein Sperrventil 53 geschlossen ist. über diese Leitung kann die Leitung 49 und damit die Zylinder der Stellzylinder 38 und 48 gefüllt werden und auch Leckverluste etc. ausgeglichen werden.

Das Ausführungsbeispiel nach Figur 6 entspricht in seinem Aufbau grundsätzlich dem nach Figur 5, jedoch sind hier die beiden Stellzylinder 38 und 48 parallel geschaltet, wobei die Leitung 49 unmittelbar mit der Leitung 50 verbunden ist. In die Zufuhrleitung 51 ist ein Mengenteiler 54 eingeschaltet, der die entsprechende Aufteilung der Druckmittelmengen zu den Stellzylindern 38 und 48 bewirkt, so daß die beschriebene gleichsinnige Verschwenkung der Pflugkörper 10, 11, 13 sowie des Zwischenstückes 3 erhalten wird.

## Patentansprüche

1. Vielschariger Aufsattel- oder Anhänge-Pflug mit einem geteilten Pflugrahmen und mindestens einem Stützrad im Bereich der Rahmenteilung, wobei beide Pflugrahmenteile (1, 2) über ein Zwischenstück (3) miteinander verbunden sind, das über Gelenke (4, 5) mit den Pflugrahmenteilen (1, 2) verbunden ist, bei dem jeder Pflugkörper (10, 11, 13) über schwenkbar am Pflugrahmen (1, 2) befestigte Konsolen (14) angeordnet ist, sämtliche Konsolen (14) aller Pflugkörper (10, 11, 13) jedes Pflugrahmenteiles (1, 2) über eine eine Parallelführung der Pflugkörper bewirkende Stange (16, 17) miteinander verbunden sind, die Stange (16, 17) oder eine der Konsolen (14) jedes Pflugrahmenteiles (1, 2) über je einen Lenker (36, 37) mit dem Zwischenstück (3) verbunden ist, wobei zur Verstellung der Schnittbreite sämtliche Pflugkörper (10, 11, 13) ein Stellzylinder (38) oder ein Spannschloß dient, der bzw. das zwischen einem der Pflugrahmenteile (1, 2) und dem Zwischenstück (3) oder dem Pflugvordergestell (18) bzw. dem mit diesem verbundenen Lenker (30) wirksam ist und das Zwischenstück (3) zwischen den Pflugrahmenteilen (1, 2) derart mit den Pflugrahmenteilen (1, 2) verbunden ist, daß die Verbindungslinie zwischen den Gelenken (4, 5) des Zwischenstückes (3) zumindest annähernd den gleichen Winkel zu den Anlagen (55) der Pflugkörper (10, 11, 13) bei jeder Schnittbreiteneinstellung einschließt und bei dem bei einer Verstellung der Schnittbreite sämtlicher Pflugkörper (10, 11, 13) das Zwischenstück (3) zwischen den Pflugrahmenteilen (1, 2) derartig verschwenkbar ist, daß die beiden Pflugrahmenteile (1, 2) einander parallel bleiben und die Schnittbreite des dem Stützrad folgenden Pflugkörpers (13) sich zum vorausgehenden Pflugkörper (10) in dem gleichen Maße ändert wie die der übrigen Pflugkörper (10, 11, 13).

2. Pflug nach Anspruch 1, dadurch gekennzeichnet, daß der Lenker (36) und die Verbindung der Gelenke (4, 15) ein Viergelenk bilden, das wirkungsmäßig dem Viergelenk aus dem Lenker (37) und der Verbindung der Gelenke (5, 15) entspricht.

3. Pflug nach Anspruch 2, dadurch gekennzeichnet, daß beide Viergelenke je ein Parallelogramm bilden.

4. Pflug nach einem der Ansprüche 1 bis 3, dadurch gekennzeichnet, daß dem Zwischenstück (3) ein weiterer Lenker (39) parallelgeschaltet ist, der die beiden Pflugrahmenteile (1, 2) miteinander verbindet.

5. Pflug nach einem der Ansprüche 1 bis 3, dadurch gekennzeichnet, daß an dem einen Pflugrahmenteil (2) ein Lenker (39) angreift, dessen anderes Ende an einer schwenkbar um den Anlenkpunkt (4) des Zwischenstückes (3) angeordneten Zwischenlenker (45) angreift, und daß der Zwischenlenker (45) über einen weiteren Lenker (46) mit der die Parallelführung bewirkenden Stange (16) oder eine der Konsolen (14) verbunden ist.

6. Pflug nach einem der Ansprüche 1 bis 3, dadurch gekennzeichnet, daß zwischen dem Pflugrahmenteil (2) und einer Konsole (14) ein Stellzylinder (48) eingeschaltet ist, der mit dem Stellzylinder (38) parallel oder in Reihe geschaltet ist.

7. Pflug nach Anspruch 6, dadurch gekennzeichnet, daß bei einer Parallelschaltung der Stellzylinder (38, 48) ein Mengenteiler (54) in eine der Leitungen (51) eingeschaltet ist.

8. Pflug nach einem der Ansprüche 1 bis 7, dadurch gekennzeichnet, daß am Zwischenstück (3) eine Stange (34) angelenkt ist, deren vorderes Ende an einem Lenker (30) oder einer Kulisse (42) angreift, der bzw. die am Pflugrahmenteil (1) angreift und dessen bzw. deren Lage relativ zum Pflugvordergestell (18) über ein Spannschloß (32, 44)) einstellbar ist.

9. Pflug nach Anspruch 8, dadurch gekennzeichnet, daß das Pflugrahmenteil (1) über einen Zwischenlenker (28) am Pflugvordergestell (18) angelenkt ist.

10. Pflug nach Anspruch 9, dadurch gekennzeichnet, daß das Gelenkviereck aus dem Arm (27) und den Lenkern (28, 30, 32) über ein Spannschloß oder ein Hydraulikzylinder (33) verstellbar ist.

11. Pflug nach Anspruch 1 bis 10, dadurch gekennzeichnet, daß am Zwischenstück (3) ein Hebel (56) gelagert ist, der das Gelenk (6) aufnimmt und dessen Ende über ein Spannschloß (57) am 2wischenstück (3) angelenkt ist.

12. Pflug nach einem der vorhergehenden Ansprüche, dadurch gekennzeichnet, daß der Pflug ein Aufsattel-Pflug ist.

13. Pflug nach einem der Ansprüche 1 bis 12, dadurch gekennzeichnet, daß die Summe der Abstände - jeweils in Rahmenrichtung gemessen -zwischen dem Gelenk (4) und dem Schwenklager 15 des vorauslaufenden Pflugkörpers (10) und dem Gelenk (5) und dem Schwenklager 15 des nachfolgenden Pflugkörpers (13) gleich dem Pflugkörperabstand ist.

14. Pflug nach Anspruch 1 bis 13, dadurch gekennzeichnet, daß der Abstand des Gelenkes (4) zum Schwenklager (15) des Pflugkörpers (10) gering oder null ist.

15. Pflug nach einem der Ansprüche 1 bis 10, dadurch gekennzeichnet, daß der Pflug ein Anhänge-Pflug ist.

16. Pflug nach Anspruch 12 oder 15, dadurch gekennzeichnet, daß der Pflug ein Drehpflug ist.

## Claims

1. A multi-share semimounted or trailer plough, having a divided plough frame and at least one supporting wheel in the region of the frame division, both plough frame parts (1, 2) being connected to one another via an intermediate piece (3) connected to the plough frame parts (1, 2) via joints (4, 5), in which plough each plough bottom (10, 11, 13) is arranged via brackets (14) pivotally secured to the plough frame (1, 2), all brackets (14) of all plough bottoms (10, 11, 13) of each plough frame part (1, 2) are connected to one another via a rod (16, 17) effecting parallel guiding of the plough bottoms, the rod (16, 17) or one of the brackets (14) of each plough frame part (1, 2) is connected to the intermediate piece (3) via a respective link (36, 37), an operating cylinder (38) or a turnbuckle serving to adjust the cutting width of all plough bottoms (10, 11, 13), which operating cylinder or turnbuckle is operative between one of the plough frame parts (1, 2) and the intermediate piece (3) or the plough forecarriage (18) or alternatively the link (30) connected thereto, and the intermediate piece (3) between the plough frame parts (1, 2) being connected to the plough frame parts (1, 2) in such a manner that the connecting line between the joints (4, 5) of the intermediate piece (3) forms at least approximately the same angle with the landsides (55) of the plough bottoms (10, 11, 13) at each cutting width setting, and in which plough the intermediate piece (3) is pivotable between the plough frame parts (1, 2) in such a manner upon adjustment of the cutting width of all plough bottoms (10, 11, 13) that the two plough frame parts (1, 2) remain parallel to one another and the cutting width of the plough bottom (13) following the supporting wheel alters with regard to the preceding plough bottom (10) to the same extent as that of the other plough bottoms (10, 11, 13).

2. A plough in accordance with Claim 1, characterised in that the link (36) and the connection of the joints (4, 15) form a four-bar linkage which operatively corresponds to the four-bar linkage formed from the link (37) and the connection of the joints (5, 15).

3. A plough in accordance with Claim 2, characterised in that both four-bar linkages each form a parallelogram.

4. A plough in accordance with any one of Claims 1 to 3, characterised in that another link (39) is connected in parallel with the intermediate piece (3), this additional link connecting the two plough frame parts (1, 2) to one another.

5. A plough in accordance with any one of Claims 1 to 3, characterised in that a link (39) engages one plough frame part (2), the other end of this link (39) engaging an intermediate link (45) pivotally arranged about the pivotal point (4) of the intermediate piece (3), and in that the intermediate link (45) is connected via another link (46) to the rod (16) effecting the parallel guiding or to one of the brackets (14).

6. A plough in accordance with any one of Claims 1 to 3, characterised in that an operating cylinder (48) is inserted between the plough frame part (2) and a bracket (14) and is connected in parallel or in series with the operating cylinder (38).

7. A plough in accordance with Claim 6, characterised in that when the operating cylinders (38, 48) are connected in parallel, a flow divider (54) is inserted into one of the lines (51).

8. A plough in accordance with any one of Claims 1 to 7, characterised in that a rod (34) is articulated on the intermediate piece (3) and its front end engages a link (30) or a connecting link (42), this link (30) or connecting link (42) engaging the plough frame part (1) and its position relative to the plough forecarriage (18) being adjustable via a turnbuckle (32, 44).

9. A plough in accordance with Claim 8, characterised in that the plough frame part (1) is articulated on the plough forecarriage (18) via an intermediate link (28).

10. A plough in accordance with Claim 9, characterised in that the four-bar linkage formed from the arm (27) and the links (28, 30, 32) is adjustable via a turnbuckle or an hydraulic cylinder (33).

11. A plough in accordance with Claim 1 to 10, characterised in that a lever (56) is mounted on the intermediate piece (3), this lever (56) receiving the joint (6) and its end being articulated on the intermediate piece (3) via a turnbuckle (57).

12. A plough in accordance with any one of the preceding Claims, characterised in that the plough is a semimounted plough.

13. A plough in accordance with any one of Claims 1 to 12, characterised in that the sum of the distances - measured in the frame direction in each case - between the joint (4) and the swivel bearing (15) of the plough bottom (10) running on ahead and the joint (5) and the swivel bearing (15) of the following plough bottom (13) is equal to the distance between the plough bottoms.

14. A plough in accordance with Claim 1 to 13, characterised in that there is a slight distance or no distance between the joint (4) and the swivel bearing (15) of the plough bottom (10).

15. A plough in accordance with any one of Claims 1 to 10, characterised in that the plough is a trailer plough.

16. A plough in accordance with Claim 12 or 15, characterised in that the plough is a reversible plough.

## Revendications

1. Charrue multisocs, semi-portée ou tractée, comportant un châssis de charrue en deux parties et au moins une roue d'appui dans la zone de la séparation du châssis, les deux parties (1, 2) du châssis étant reliées l'une à l'autre par une pièce intermédiaire (3) qui est reliée par des articulations (4, 5) aux parties (1, 2) du châssis, charrue dans laquelle
chaque corps de charrue (10, 11, 13) est disposé sur le châssis de charrue (1, 2) au moyen de consoles (14) pivotantes articulées sur celui-ci,
les différentes consoles (14) de tous les corps de charrue (10, 11, 13) de chaque partie (1, 2) du châssis sont reliées entre elles par une tige (16, 17) créant un guidage à parallélogramme des corps de charrue,
la tige (16, 17), ou l'une des consoles (14) de chaque partie (1, 2) du châssis, est reliée à la pièce intermédiaire (3) par une bielle (36, 37), un vérin ou un manchon de réglage (38), servant à régler la largeur de coupe des différents corps de charrue (10, 11, 13), le vérin ou le manchon de réglage (38), agissant entre l'une des parties (1, 2) du châssis et la pièce intermédiaire (3), ou entre le bâti avant (18) de la charrue, ou la bielle (30) reliée à elle,
et la pièce intermédiaire (3) placée entre les parties (1, 2) du châssis est reliée à celles-ci de telle façon que la droite de liaison entre les articulations (4, 5) de la pièce intermédiaire (3) forme, au moins de façon approchée, le même angle avec les accessoires des corps de charrue (10, 11, 13) dans chacun des réglages de largeur de coupe,
et, pour un réglage de la largeur de coupe des différents corps de charrue (10, 11, 13), la pièce intermédiaire (3) placée entre les parties (1, 2) du châssis peut pivoter de telle façon que les deux parties (1, 2) du châssis restent parallèles l'une à l'autre et que la largeur de coupe du corps de charrue (13), qui suit la roue d'appui, se modifie, par rapport au corps de charrue (10) qui précède la roue, de la même manière que celle des autres corps de charrue (10, 11, 13).

2. Charrue suivant la revendication 1, caractérisée en ce que la bielle (36) et la liaison des articulations (4, 15) forment un quadrilatère articulé, qui correspond, par son fonctionnement, au quadrilatère articulé formé par la bielle (37) et la liaison des articulations (5, 15).

3. Charrue suivant la revendication 2, caractérisée en ce que les deux quadrilatères articulés forment chacun un parallélogramme.

4. Charrue suivant l'une des revendications 1 à 3, caractérisée en ce qu'une autre bielle (39) est montée en parallèle avec la pièce intermédiaire (3) et relie entre elles les deux parties (1, 2) du châssis.

5. Charrue suivant l'une des revendications 1 à 3, caractérisée en ce que sur l'une des parties (2) du châssis, agit une bielle (39), dont l'autre extrémité est connectée à une bielle intermédiaire (45) disposée de façon à pouvoir pivoter autour du point d'articulation (4) de la pièce intermédiaire (3), et en ce que la bielle intermédiaire (45) est reliée, par l'intermédiaire d'une autre bielle (46), à la tige (16) formant le guidage par parallélogramme, ou à une des consoles (14).

6. Charrue suivant l'une des revendications 1 à 3, caractérisée en ce qu'un vérin de réglage (48), qui est monté en parallèle ou en série avec le vérin de réglage (38), est introduit entre la partie (2) du châssis et une console (14).

7. Charrue suivant la revendication 6, caractérisée en ce que, dans le cas d'un montage en parallèle des vérins de réglage (38, 48), un répartiteur de débit (54) est installé dans une des conduites (51).

8. Charrue suivant l'une des revendications 1 à 7, caractérisée en ce que, sur la pièce intermédiaire (3), s'articule une tige (34) dont l'extrémité avant est connectée à une bielle (30) ou une coulisse (42), reliées elles-mêmes à la partie (1) du châssis, et dont la position relative par rapport au bâti avant (18) de la charrue peut être réglée au moyen d'un manchon de réglage (32, 44).

9. Charrue suivant la revendication 8, caractérisée en ce que la partie (1) du châssis s'articule sur le bâti avant (18) de la charrue par l'intermédiaire d'une bielle intermédiaire (28).

10. Charrue suivant la revendication 9, caractérisée en ce que le quadrilatère articulé constitué par le bras (27) et les bielles (28, 30, 32) est réglable au moyen d'un manchon de réglage ou d'un vérin hydraulique (33).

11. Charrue suivant la revendication 1 à 10, caractérisée en ce que, sur la pièce intermédiaire (3), est monté un levier (56) qui reçoit l'articulation (6) et dont l'extrémité s'articule sur la pièce intermédiaire (3) au moyen d'un manchon de réglage (57).

12. Charrue suivant l'une des revendications précédentes, caractérisée en ce que la charrue est une charrue semi-portée.

13. Charrue suivant l'une des revendications 1 à 12, caractérisée en ce que la somme des distances - mesurées chaque fois dans la direction du châssis - entre l'articulation (4) et le palier de pivotement (15) du corps de charrue avant (10) et l'articulation (5) et le palier de pivotement (15) du corps de charrue (13) qui suit est égale à la distance entre les corps de charrue.

14. Charrue suivant la revendication 1 à la revendication 13, caractérisée en ce que la distance de l'articulation (4) au palier de pivotement (15) du corps de charrue (10) est faible ou nulle.

15. Charrue suivant la revendication 1 à la revendication 10, caractérisée en ce que la charrue est une charrue tractée.

16. Charrue suivant la revendication 12 ou la revendication 15, caractérisée en ce que la charrue est une charrue réversible.
